# EUROPEAN PATENT APPLICATION

(11) **EP 3 531 685 A1**
(43) Date of publication of application: **28.08.2019**
(21) Application number: 19158336.8
(22) Date of filing: 20.02.2019
(51) Int. Cl.: H04N 5/225, G08B 13/196

(54) **IMAGE CAPTURING APPARATUS**

(30) Priority: 26.02.2018 JP 2018032236
(71) Applicant: CANON KABUSHIKI KAISHA, Ohta-ku Tokyo 146-8501 (JP)
(72) Inventor: MATSUO, Masatake, Ohta-ku, Tokyo 146-8501 (JP)
(74) Representative: Perkins, Dawn Elizabeth

(57) **Abstract**

An image capturing apparatus includes a camera unit, a substrate unit arranged near the camera unit, a substantially sphere-shaped dome cover configured to cover the camera unit, a housing configured to support the dome cover and to cover the substrate unit, and an external recording unit, wherein the dome cover is arranged eccentric to the housing, and wherein the external recording unit is arranged between the camera unit and the substrate unit.

## Description

### BACKGROUND OF THE INVENTION

### Field of the Invention

The present invention relates to an image capturing apparatus such as a network camera.

### Description of the Related Art

In recent years, network cameras that remotely monitor images have been introduced to vehicles such as trains and buses. Such a network camera uses a method for edge-recording an image into a removable recording medium. In a case where the image is checked, the recording medium needs to be removed from the network camera. At that time, as a prerequisite, a housing of the network camera needs to be removed from a body of the network camera.

Japanese Patent Application Laid-Open No. 2007-150790 discusses a monitoring camera that includes an attachable and removable cover in a back portion of the monitoring camera. The cover hides a card-type peripheral device in a normal use and is readily attached to or removed from the device when necessary.

However, the monitoring camera discussed in Japanese Patent Application Laid-Open No. 2007-150790 has a problem that the card-type peripheral device is not efficiently arranged inside a case of the monitoring camera, and thus causing an increase in size of the entire apparatus.

The present invention has been made in view of such a problem, and is to provide efficient arrangement of an external recording unit.

### SUMMARY OF THE INVENTION

According to an aspect of the present invention, there is provided an image capturing apparatus as specified in claims 1 to 10.

Further features of the present invention will become apparent from the following description of embodiments with reference to the attached drawings.

### BRIEF DESCRIPTION OF THE DRAWINGS

Fig. 1 is an external view illustrating an example of a network camera.
Figs. 2A and 2B are exploded perspective views illustrating an example of a configuration of the network camera.
Fig. 3 is a sectional view illustrating an example of a configuration of the network camera.
Fig. 4 is a perspective view illustrating an example of a state in which a housing is removed.

### DESCRIPTION OF THE EMBODIMENTS

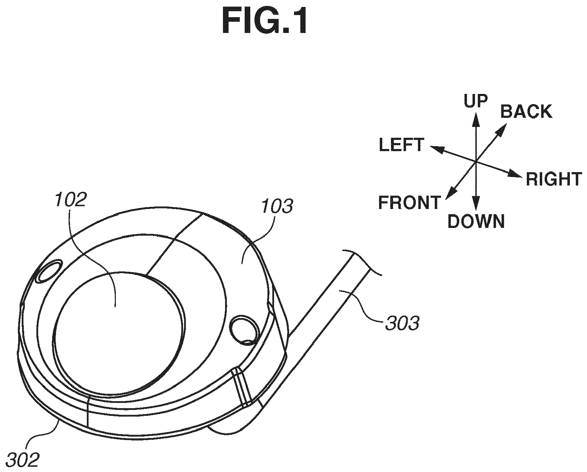

Hereinafter, an image capturing apparatus according to an embodiment is described with reference to the drawings. The present embodiment is described using a case in which the image capturing apparatus is a network camera to be installed in a vehicle. Fig. 1 is an external view illustrating an example of a configuration of the network camera. In each of the drawings including Fig. 1, front, back, right, left, up, and down are indicated for the sake of convenience in description. The term "front" used herein represents a side on which a dome cover 102 is eccentric to a housing 103 as described below.

The network camera includes the dome cover 102, the housing 103, and a bottom cover 302. In the network camera, a communication/power feeding cable 303 (a pigtail cable) is arranged from the bottom cover 302. The communication/power feeding cable 303 has an end that is connected to a RJ-45 connector.

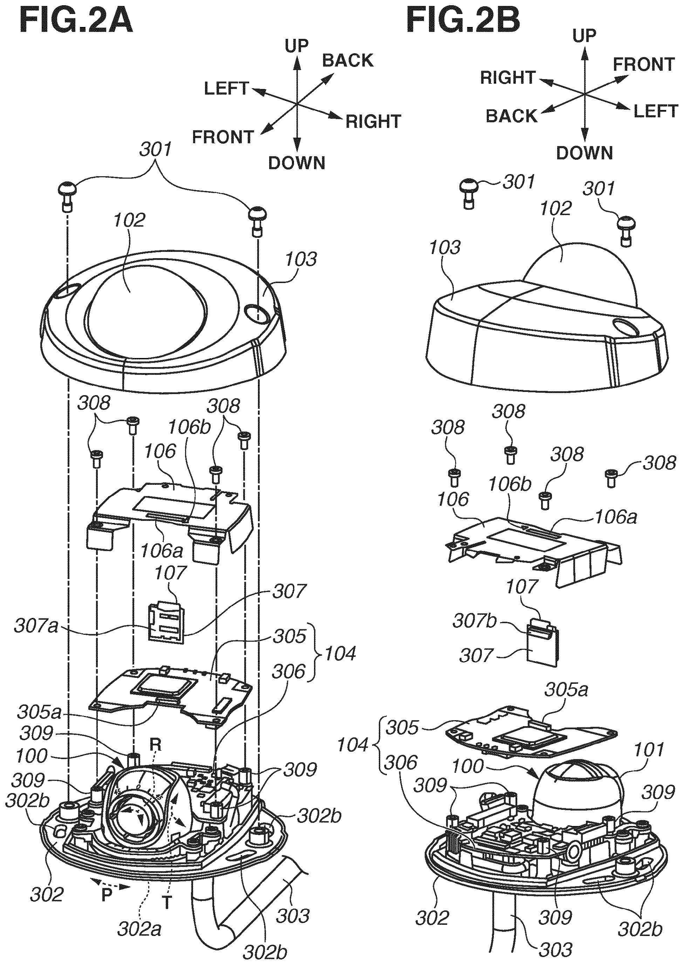

Figs. 2A and 2B are exploded perspective views illustrating an example of a configuration of the network camera.

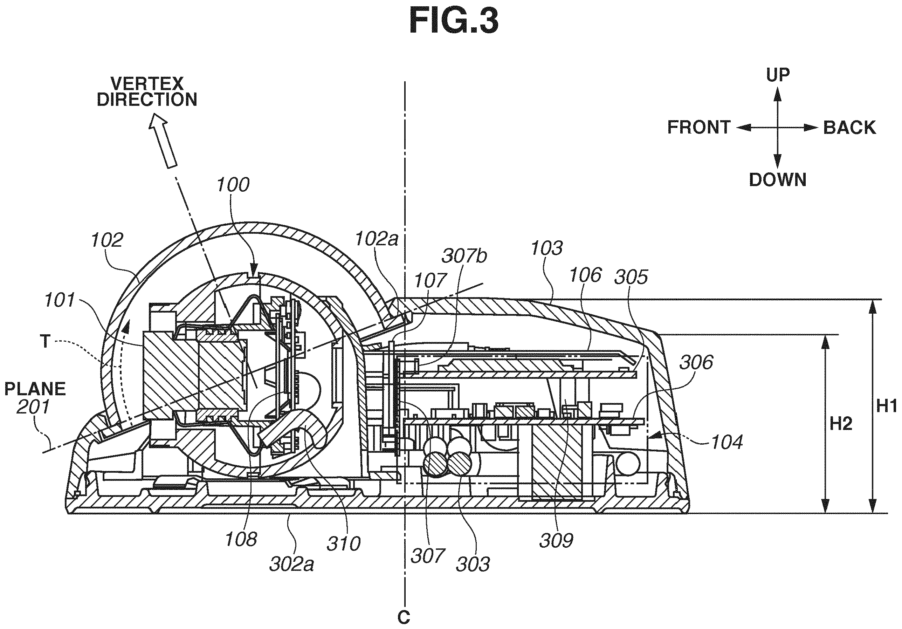

Fig. 3 is a sectional view if the network camera is cut in an up-down direction (a height direction) along the line that is parallel to a front-back direction and passes through the center in a left-right direction. The term "up-down direction" used herein is a direction perpendicular to an installation surface 302a (described below) and corresponds to an example of a first direction.

The dome cover 102 covers a camera unit 100 that includes a lens barrel unit 101. The dome cover 102 is a substantially hemispherical-shaped optical window made of a transparent material. As illustrated in Fig. 3, the dome cover 102 is supported by the housing 103 while a flange portion 102a engages as a peripheral edge portion of the dome cover 102 with an opening portion of the housing 103. The dome cover 102 is eccentric to the housing 103 from the center of the housing 103. In particular, if the dome cover 102 is approximated to a portion of a sphere, the center of the sphere is eccentric to the front side of the housing 103 as viewed from the up-down direction. The eccentric arrangement of the dome cover 102 toward the front side with respect to the housing 103 enables the dome cover 102 to cover the camera unit 100 (described below) positioned in the front side of the housing 103.

Moreover, the dome cover 102 is inclined to the up-down direction of the housing 103. Particularly, as illustrated in Fig. 3, a vertex direction of the dome cover 102 is inclined toward the front side relative to the up-down direction of the housing 103. The term "vertex direction" used herein is a direction that passes through the center of a sphere if the dome cover 102 is approximated to the sphere and is perpendicular to a virtual plane 201 including the flange portion 102a of the dome cover 102. Inclination of the dome cover 102 toward the front side relative to the up-down direction of the housing 103 can reduce a height of the network camera, so that the network camera, in a case where it is installed inside a vehicle, does not lie in the way of a passenger. Moreover, a wider imaging range of the network camera can be obtained.

The housing 103 covers the camera unit 100 including the lens barrel unit 101, a substrate unit 104, and an external recording unit 107. The housing 103 is made of plastic, which is a nonconductive material. The housing 103 is substantially circular as viewed from the up-down direction, and a height of the housing 103 becomes lower as the housing 103 becomes closer to the front side. The housing 103 is locked to the bottom cover 302 with a screw 301 serving as a locking member. The screw 301 has a specially shaped head for protection against theft and tampering.

The bottom cover 302 covers the housing 103 from a lower side thereof. The camera unit 100 and the substrate unit 104 are mounted on the bottom cover 302. The bottom cover 302 includes a high-thermal-conductive metal member mainly for heat radiation. The bottom cover 302 is substantially circular as viewed from the up-down direction. A surface of the bottom cover 302 on which the camera unit 100 and the substrate unit 104 are not mounted is an installation surface 302a. The installation surface 302a is used for attaching the network camera to a surface such as a ceiling surface and a wall of a vehicle. Moreover, a plurality of insertion holes 302b (e.g., four insertion holes) each having a long hole shape is formed on the bottom cover 302 so that the screw 301 for fixing the network camera to a surface such as a ceiling surface and a wall are inserted into the insertion holes 302b. In a case where the bottom cover 302 is fixed to a surface such as a ceiling surface and a wall, the communication/power feeding cable 303 extending from the bottom cover 302 is wired and fixed in position. Thus, the screws 301 are inserted into the insertion holes 302b to fix the bottom cover 302 to the surface.

The camera unit 100 captures a subject image formed through the lens barrel unit 101. The camera unit 100 includes the lens barrel unit 101 and an image capturing element 108. The camera unit 100 has a substantially sphere-shaped appearance. The camera unit 100 is installed on a front side of the bottom cover 302. The camera unit 100 of the present embodiment is positioned on a front side relative to the center in a front-back direction of the network camera (a dashed line C illustrated in Fig. 3).

The lens barrel unit 101 includes a lens group and a lens barrel having a lens holding member for holding the lens group. A lens direction of the lens barrel unit 101 can be adjusted in an optional direction. As illustrated in Fig. 2, a lens direction of the lens barrel unit 101 can be adjusted in three directions of a pan (P) direction, a tilt (T) direction, and a rotation (R) direction. That is, a lens direction of the lens barrel unit 101 can be adjusted around three axes perpendicular to one another. After a user adjusts a lens direction of the lens barrel unit 101 to a desired direction, the housing 103 is locked to the bottom cover 302.

The substrate unit 104 includes a plurality of printed-circuit boards. The substrate unit 104 is installed in a position near the camera unit 100 and on the back side of the bottom cover 302. In the present embodiment, the substrate unit 104 includes a first printed-circuit board 305 and a second printed-circuit board 306. The first printed-circuit board 305 includes an image processing circuit, a network processing circuit, and a memory. The second printed-circuit board 306 includes a power system integrated circuit (IC) and an external interface connector.

The first printed-circuit board 305 and the second printed-circuit board 306 are arranged in a state in which mount surfaces of the first printed-circuit board 305 and the second printed-circuit board 306 are substantially parallel to the installation surface 302a of the bottom cover 302. The communication/power feeding cable 303 is connected to the second printed-circuit board 306, and the second printed-circuit board 306 is fixed to the bottom cover 302.

On the other hand, the first printed-circuit board 305 is supported on the second printed-circuit board 306 via a plurality of metal spacers 309 (e.g., four metal spacers), and electrical continuity between the first printed-circuit board 305 and the bottom cover 302 is maintained. The first printed-circuit board 305 is connected to the second printed-circuit board 306 via a board-to-board connecter as an electrical connection unit. Moreover, as illustrated in Fig. 3, the first printed-circuit board 305 is connected to the camera unit 100 via a thin coaxial cable 310 as a harness.

The substrate unit 104 is covered with a shielding member 106 serving mainly for electromagnetic compatibility (EMC) and heat radiation. The shielding member 106 is a conductive member having conductivity. The shielding member 106 covers the substrate unit 104 not only from the upper side, but also from the right side, the left side, and the front side (partially). As illustrated in Fig. 2, the shielding member 106 is fixed, together with the first printed-circuit board 305, to the spacers 309 with a plurality of screws 308 (e.g., four screws). The shielding member 106 includes an opening 106a on an upper surface thereof, and the external recording unit 107 is to be inserted to the opening 106a.

The external recording unit 107 is a non-volatile memory, and edge-records a monitoring image captured by the camera unit 100. The external recording unit 107 has substantially a plate shape with planes on front and back sides thereof. That is, the external recording unit 107 has a card shape. The external recording unit 107 is removable from a card connector 307a mounted on a third printed-circuit board 307. The third printed-circuit board 307 is electrically connected to the first printed-circuit board 305 via a connector 307b.

In the network camera of the present embodiment, the external recording unit 107 (the third printed-circuit board 307) is arranged so as to be sandwiched between the camera unit 100 and the substrate unit 104. Particularly, of the planes on the front and back sides of the external recording unit 107, a plane on one side is arranged opposite the camera unit 100, whereas a plane on the other side is arranged opposite the substrate unit 104. Thus, the external recording unit 107 is arranged in a standing manner such that the planes on the front and back sides are substantially perpendicular to the installation surface 302a.

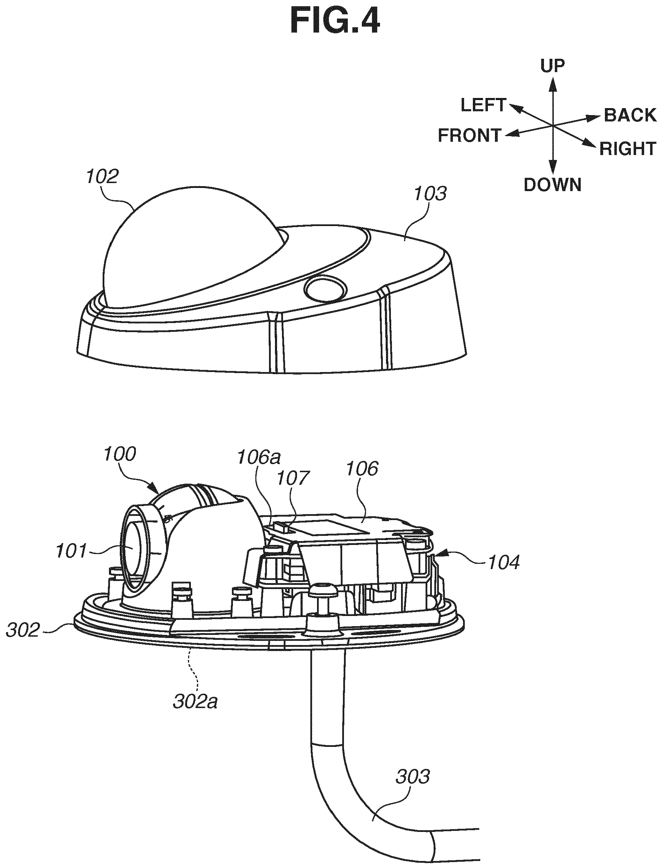

Fig. 4 is a perspective view illustrating a state in which the housing 103 is removed. As illustrated in Fig. 4, in a state in which the external recording unit 107 is attached to the card connector 307a, one portion of the external recording unit 107 protrudes toward the housing 103 (toward the upper side) via the opening 106a of the shielding member 106. Hence, in a state in which the housing 103 is removed from the bottom cover 302, a user can visually recognize the external recording unit 107 from the opening 106a of the shielding member 106. As illustrated in Fig. 2, an index 106b is provided on the top surface of the shielding member 106 such that the user can insert the external recording unit 107 into the card connector 307a without wrongly arranging the front and back sides of the external recording unit 107.

An attachable and removable direction in which the external recording unit 107 is attached to and removed from the card connector 307a matches a direction in which the housing 103 is attached to and removed from the bottom cover 302. Herein, it can be assumed that there is no obstacle that interferes with the housing 103 in a direction in which the housing 103 can be attached and removed. Accordingly, the direction in which the housing 103 is attached and removed matches the direction in which the external recording unit 107 is attached and removed, so that the user can readily attach and remove the external recording unit 107.

As described above, the dome cover 102 is arranged eccentric to the housing 103, so that the camera unit 100 is arranged in space on the side near the dome cover 102 and the substrate unit 104 is arranged in the remaining space inside the housing 103. Since a boundary between the camera unit 100 and the substrate unit 104 is provided near a substantially center portion of the housing 103, the space of the housing 103 is relatively large in a height direction. Thus, the external recording unit 107 can be efficiently arranged between the camera unit 100 and the substrate unit 104 without increasing size of the housing 103. Hence, even if the external recording unit 107 is arranged between the camera unit 100 and the substrate unit 104, an increase in size of the network camera can be prevented. Further, since the external recording unit 107 does not need a cover separate from the housing 103, costs of the network camera can be reduced.

A plane on one side of the external recording unit 107 is arranged opposite the camera unit 100, whereas a plane on the other side is arranged opposite the substrate unit 104. Thus, the external recording unit 107 can be arranged in a standing manner between the camera unit 100 and the substrate unit 104, and the external recording unit 107 can be efficiently arranged.

The external recording unit 107 is arranged such that the planes thereof are substantially perpendicular to the installation surface 302a of the bottom cover 302. Thus, a removal direction of the external recording unit 107 can be substantially perpendicular to the installation surface 302a. Operability of attachment and removal of the external recording unit 107 can be improved compared with a case, for example, where an attachment and removal direction of the external recording unit 107 is parallel to the installation surface 302a.

A height of the housing 103 is practically determined by the flange portion 102a of the dome cover 102. That is, as illustrated in Fig. 3, a first height H1 that is the highest of the housing 103 from a back portion of the flange portion 102a of the dome cover 102 inclined toward the front, is determined with a thickness of the housing 103 added. The thickness of the housing 103 is determined such that a minimum wall thickness requirement is met. The first height H1 is positioned substantially in a center of the housing 103 and immediately above the flange portion 102a. The housing 103 has an appearance shape gently inclined from the height H1 toward a second height H2 on the back side. The second height H2 is lower than the first height H1 (H1 > H2), and is determined by a height of the substrate unit 104.

Since the position immediately above the back portion of the flange portion 102a is the highest position of the housing 103, the housing 103 provides a relatively wide space in a height direction near the flange portion 102a. As illustrated in Fig. 3, the external recording unit 107 is arranged so as to overlap with the flange portion 102a of the dome cover 102 as viewed from the height direction. Thus, the external recording unit 107 can be efficiently arranged without increasing size of the housing 103.

Further, as illustrated in Fig. 3, the external recording unit 107 is arranged with one portion thereof protruding toward the housing 103 (the upper side) relative to the substrate unit 104. Thus, after removing the housing 103, the user can readily recognize the external recording unit 107 in a visual manner, and can readily remove the external recording unit 107.

As illustrated in Fig. 3, the shielding member 106 is arranged between the substrate unit 104 and the housing 103. Thus, the shielding member 106 serves for EMC and heat radiation between the substrate unit 104 and an outside thereof.

The shielding member 106 has the opening 106a into which the external recording unit 107 is inserted, and the external recording unit 107 is arranged with one portion thereof protruding toward the housing 103 relative to the shielding member 106 through the opening 106a. Thus, after removing the housing 103, the user can readily visually recognize the external recording unit 107.

According to the network camera of the present embodiment, by including the external recording unit 107, an image captured by the camera unit 100 can be edge-recorded. Further, the external recording unit 107 can be readily attached and removed, so that the edge-recorded image can be browsed with other equipment.

The embodiment has been described for a network camera to be installed in a vehicle mainly for monitoring application purposes. However, the embodiment can be applied to other image capturing apparatuses.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. An image capturing apparatus comprising:
a camera unit (100);
a substrate unit (104) arranged near the camera unit (100);
a dome cover (102) shaped as a portion of a sphere and configured to cover the camera unit (100);
a housing (103) configured to support the dome cover (102) and cover the substrate unit (104); and
an external recording unit (107),
wherein the dome cover (102) is arranged eccentric to the housing (103), and
wherein the external recording unit (107) is arranged between the camera unit (100) and the substrate unit (104).

2. The image capturing apparatus according to claim 1, wherein the external recording unit (107) has substantially a plate shape with planes on front and back sides of the external recording unit (107), and is arranged such that one of the planes faces the camera unit (100) and the other of the planes faces the substrate unit (104).

3. The image capturing apparatus according to claim 1, wherein the external recording unit (107) has substantially a plate shape with planes on front and back sides, and the planes are arranged so as to be substantially perpendicular to an installation surface (302a) of the image capturing apparatus.

4. The image capturing apparatus according to any preceding claim,
wherein the dome cover (102) includes a peripheral edge portion (102a), and a vertex direction of the dome cover (102) is inclined to a first direction perpendicular to an installation surface (302a) of the image capturing apparatus, and
wherein the external recording unit (107) is arranged so as to overlap with the peripheral edge portion (102a) as viewed from the first direction.

5. The image capturing apparatus according to any preceding claim, wherein the external recording unit (107) is arranged in a state in which one portion of the external recording unit (107) protrudes relative to the substrate unit (104).

6. The image capturing apparatus according to any preceding claim, further comprising a shielding member (106) made of a conductive material,
wherein the shielding member (106) is arranged between the substrate unit (104) and the housing (103).

7. The image capturing apparatus according to claim 6,
wherein the shielding member (106) has an opening (106a) into which the external recording unit (107) is to be inserted, and
wherein the external recording unit (107) is arranged in a state in which one portion of the external recording unit (107) protrudes through the opening (106a).

8. The image capturing apparatus according to any preceding claim, wherein the housing (103) is substantially circular as viewed from the up-down direction, and the height of the housing (103) becomes lower closer to the front side, and the dome cover (102) is positioned towards the front side.

9. The image capturing apparatus according to claim 8, wherein the substrate unit (104) comprises at least one printed circuit board and is positioned towards the back side of the housing (103).

10. The image capturing apparatus according to any preceding claim, wherein the external recording unit (107) is a non-volatile memory and is configured to record an image captured by the camera unit (100), and is removable from a card connector (307a) mounted on a printed circuit board (307) of the substrate unit (104).
